Europäisches Patentamt

(19) European Patent Office

Office européen des brevets

(11) Numéro de publication : **0 041 456**
**B1**

(12) **FASCICULE DE BREVET EUROPÉEN**

(45) Date de publication du fascicule du brevet :
·23.12.87

(51) Int. Cl.⁴ : **A 01 K  1/015, D 06 N  7/00,
D 06 N  3/10, D 06 N  3/04**

(21) Numéro de dépôt : **81400867.8**

(22) Date de dépôt : **27.05.81**

(54) **Revêtement de sols d'étables.**

(30) Priorité : **30.05.80 FR 8012061**

(43) Date de publication de la demande :
**09.12.81 Bulletin 81/49**

(45) Mention de la délivrance du brevet :
**23.12.87 Bulletin 87/52**

(84) Etats contractants désignés :
**AT BE CH DE FR GB IT LI LU NL SE**

(56) Documents cités :
**DE-A- 2 102 084
DE-A- 2 515 098
FR-A- 1 454 540
FR-A- 2 088 466
FR-A- 2 343 424
GB-A- 1 138 159
US-A- 2 081 334
US-A- 3 833 459
US-A- 3 955 030**

(73) Titulaire : **Foenard, Pierre
Pont Turpin
F-61370 Echauffour (FR)**

(72) Inventeur : **Foenard, Pierre
Pont Turpin
F-61370 Echauffour (FR)**

(74) Mandataire : **Weinmiller, Jürgen et al
Lennéstrasse 9 Postfach 24
D-8133 Feldafing (DE)**

EP 0 041 456 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Description

La présente invention a pour objet un revêtement de sols d'étables.

On sait que depuis des temps très reculés, la litière des animaux domestiques a toujours été composée de paille, laquelle une fois souillée était utilisée comme engrais.

Or, à l'heure actuelle, la paille est un produit relativement cher et d'approvisionnement parfois aléatoire surtout pour un éleveur qui ne la produit pas lui-même.

De plus, l'utilisation de la paille par un éleveur-producteur nécessite la mise en oeuvre d'appareils de conditionnement et de manutention ainsi que de hangars de stockage, et l'utilisation d'une main-d'œuvre apte à effectuer ces travaux ainsi que l'entretien des étables, notamment le renouvellement fréquent des litières.

Or, l'augmentation du coût du pétrole et de ses dérivés conduit à envisager d'autres débouchés pour la paille, en particulier en tant qu'aliment pour bétail, combustible de chauffage, et matière première pour la synthèse de l'alcool.

Pour remédier à de tels inconvénients, on a proposé de réaliser des étables à logettes individuelles dont le sol est soit en terre battue, soit en caillebotis de bois, soit en briques posées sur champ, soit en béton.

Cependant les sols en terre battue surtout calcaires s'effritent et se creusent localement de trous et ils nécessitent un entretien constant et difficile.

Les caillebotis de bois sont durs et d'un prix de revient élevé et freinent en outre l'écoulement des liquides.

Les sols en briques ou en béton sont également durs et de plus froids.

De tels types de réalisation de sols nécessitent cependant l'emploi d'une certaine quantité de paille et en outre ils provoquent chez les animaux qui les fréquentent certains troubles physiologiques tels que foulures, entorses, déformations, rhumatismes, arthrites et autres.

Il a également été proposé (voir notamment FR-A-2 088 466, FR-A-2 343 424 et US-A-2 081 334) de réaliser des revêtements de sols d'étables par juxtaposition de couches formées par des matières textiles naturelles et/ou synthétiques. Toutefois les résultats obtenus jusqu'à présent n'ont pas été satisfaisants, les revêtements fabriqués ne présentant ni la souplesse ni la perméabilité nécessaires au bon traitement des animaux. Des revêtements d'étables perméables sont cependant connus de DE-A-2 102 084 et DE-A-2 515 098.

La présente invention a pour objet un revêtement de sols pour étables d'un entretien aisé, d'une résistance mécanique élevée alliée à une bonne souplesse, facile à installer tout en étant d'un prix de revient modique et d'une durée de vie élevée.

L'invention a donc pour objet un revêtement de sols d'étables, comportant au moins deux couches textiles mutuellement aiguilletées, une couche supérieure et une couche inférieure, et éventuellement des couches intermédiaires, la face supérieure de ladite couche supérieure présentant notamment une résistance élevée à l'abrasion et une perméabilité permettant l'évaporation, caractérisé par le fait que ladite couche supérieure, située du côté par lequel est effectué l'aiguilletage, est imprégnée au moins au voisinage de sa face supérieure par au moins une matière choisie dans le groupe comportant un copolymère réticulé à base de résine acrylique et de styrène, et une résine acrylique le taux d'imprégnation étant compris entre 500 et 2 000 g de matière par mètre carré de surface.

D'autres caractéristiques et avantages de l'invention ressortent de la description qui suit donnée à titre d'exemple purement illustratif mais nullement limitatif en référence aux dessins annexés dans lesquels :

La figure 1 représente en coupe un premier mode de réalisation d'un revêtement selon l'invention.

La figure 2 représente en coupe un deuxième mode de réalisation d'un revêtement selon l'invention.

La figure 3 représente en coupe un troisième mode de réalisation d'un revêtement selon l'invention.

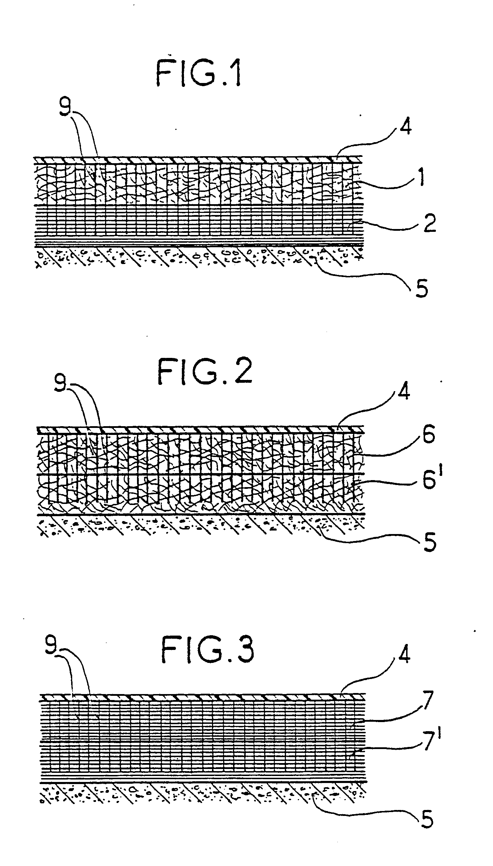

En référence à la figure 1, un revêtement de sols d'étables selon l'invention comporte deux couches 1 et 2 de textiles mutuellement aiguilletées, comme schématisé par les traits verticaux 3, et cela par tout moyen approprié.

On réalise un aiguilletage serré, de manière à augmenter la résistance mécanique de l'ensemble ; c'est ainsi que la densité de perforation peut être d'au moins 100 à 120 par cm². L'aiguilletage est réalisé de la couche supérieure vers la couche inférieure.

Les textiles composant les couches sont du type « non tissé » c'est-à-dire qu'ils sont formés, par exemple, pour la couche supérieure 1 de fibres courtes enchevêtrées et pour la couche inférieure 2 de fibres continues.

Ces textiles sont réalisés par voie sèche ou humide ou par extrusion de matières synthétiques telles que par exemple des polyamides, des polyesters, des polyoléfines, et notamment du polyéthylène. Cependant des textiles naturels peuvent également être utilisés soit seuls, soit en mélange avec les textiles synthétiques, en particulier, des déchets de laine, de coton ou autres, ayant subi un traitement apte à les rendre imputrescibles.

La référence 4 désigne une matière d'imprégnation de la surface supérieure de la couche 1.

Cette matière peut être constituée par une résine acrylique ou un copolymère réticulé à base de résine acrylique et de styrène que l'on applique par exemple par pression ou pulvérisation sur la couche 1 de telle sorte qu'elle pénètre dans le feutre et forme après séchage une pellicule de grande résistance à l'abrasion. On utilise avantageusement un copolymère styrène-butadiène acrylique.

Le taux d'imprégnation est de l'ordre de 500 à 2 000 g de matière par mètre carré.

Dans tous les cas, la profondeur d'imprégnation est de l'ordre de 2 à 3 mm.

En outre un pigment par exemple de couleur verte peut être incorporé à cette matière.

L'imprégnation est réalisée sur la face du revêtement située du côté par lequel est effectué l'aiguilletage de manière à favoriser la pénétration de la matière.

Le revêtement décrit dans ce qui précède est donc disposé sur le sol 5 de l'étable par l'intermédiaire de la couche 2 et fixé à celui-ci par tout moyen approprié.

Une variante de ce mode de réalisation consisterait bien entendu à réaliser la couche 1 en textile à fibres continues, et la couche 2 en textile à fibres courtes enchevêtrées.

Dans le mode de réalisation représenté sur la figure 2 les deux couches 6 et 6' sont confectionnées toutes deux en textile à fibres courtes enchevêtrées, tandis que dans le mode de réalisation représenté sur la figure 3, les deux couches 7 et 7' sont confectionnées en textile à fibres continues.

Bien entendu, dans tous les cas on met en œuvre la matière d'imprégnation 4 de la couche supérieure.

Il faut noter en outre qu'un tapis peut être interposé entre les couches inférieures du revêtement et le sol 5.

Un tel tapis réalisé par exemple en une mousse de caoutchouc a éventuellement pour but d'augmenter le moelleux élastique de l'ensemble.

On va donner maintenant un exemple concret de revêtement selon l'invention.

La couche supérieure 1 est confectionnée en textile à fibres courtes enchevêtrées. Son épaisseur est de 8 à 10 mm environ.

La couche inférieure 2 est confectionnée en textile à fibres continues. Son épaisseur est de 8 à 10 mm environ.

Ces deux couches sont mutuellement aiguillettées selon une densité de perforations d'au moins 100 à 120 par cm².

La matière d'imprégnation est obtenue à partir du mélange suivant :

50 parties d'une solution aqueuse de résine styrène-butadiène à 50 % d'extrait sec

50 parties d'une dispersion aqueuse de résine acrylique à 50 % d'extrait sec

10 parties d'une solution de mélamine formol à 70 % d'extrait sec, destinée à la réticulation du copolymère

1 partie d'un catalyseur acide pour la mélamine formol.

On ajoute également un pigment vert.

La couche supérieure est imprégnée par le copolymère précédemment décrit selon un taux d'imprégnation de 1 000 g par mètre carré.

La profondeur d'imprégnation est de l'ordre de 2 à 3 mm.

Les avantages principaux du revêtement selon l'invention sont donc les suivants :

En premier lieu, un tel revêtement par suite de la présence d'une couche d'imprégnation présente une résistance particulièrement marquée à l'abrasion, à la perforation, à la déchirure et à la traction entraînées par les sabots des bêtes et en outre sa rugosité évite le glissement des animaux lors de leurs mouvements dans la logette.

Le revêtement objet de la présente invention présente une excellente souplesse et une certaine élasticité, résultant notamment des caractéristiques d'imprégnation, et qui assurent un bon confort pour l'animal.

Par ailleurs, l'objet de l'invention assure une excellente isothermie du contact animal-litière et un meilleur confort, et cela par suite de la présence d'air dans le réseau des fibres du textile.

De plus ce revêtement est aisément lavable par un simple jet d'eau et imputrescible ; il présente également une très bonne résistance chimique aux produits de désinfection tels que l'eau de javel, le formaldéhyde, la soude ou autres. Sa perméabilité permet l'évaporation à son interface avec le sol évitant de la sorte toute prolifération de foyers microbiens qui trouvaient un milieu favorable à leur développement dans les agencements antérieurs.

Il faut noter en outre que le revêtement selon l'invention peut être rapidement et aisément installé sur un sol plan à pente de 1 à 2 % par toute technique appropriée telle que le clouage, le collage, le spitage ou autres.

En général, la mise en œuvre du revêtement selon l'invention se traduit par une meilleure santé des animaux donc par une rentabilité améliorée sur le plan de la production du lait et de la viande.

L'invention trouve des applications particulièrement avantageuses dans toutes les installations d'élevage d'animaux domestiques notamment des bovidés ainsi que dans les porcheries et les chenils.

On pourrait également envisager l'utilisation de l'objet de l'invention comme revêtement des sols de lieux tels que salles de sports, halls publics, gares, aéroports et autres.

**Revendications**

1. Revêtement de sols d'étables, comportant au moins deux couches textiles mutuellement aiguillettées, une couche supérieure (1, 6, 7) et une couche inférieure (2, 6', 7'), et éventuellement des couches intermédiaires, la face supérieure de ladite couche supérieure (1, 6, 7) présentant notamment une résistance élevée à l'abrasion et une perméabilité permettant l'évaporation, caractérisé par le fait que ladite couche supérieure (1), située du côté par lequel est effectué l'aiguilletage est imprégnée au moins au voisinage de sa face supérieure par au moins une matière (4) choisie dans le groupe comportant un copolymère réticulé à base de résine acrylique et de styrène, et une résine acrylique, le taux d'imprégnation étant compris entre 500 et 2 000 g de matière par mètre carré de surface.

2. Revêtement selon la revendication 1, caractérisé par le fait que le copolymère est à base de résines styrène butadiène et acrylique.

3. Revêtement selon la revendication 2, caractérisé par le fait que la matière d'imprégnation est obtenue à partir du mélange suivant :

50 parties d'une solution aqueuse de résine styrène butadiène à 50 % d'extrait sec

50 parties d'une dispersion aqueuse de résine acrylique à 50 % d'extrait sec

10 parties d'une solution de mélamine formol à 70 % d'extrait sec

1 partie d'un catalyseur acide.

4. Revêtement selon l'une des revendications 1 à 3, caractérisé par le fait que la profondeur d'imprégnation de ladite couche supérieure est de l'ordre de 2 à 3 mm.

5. Revêtement selon l'une des revendications 1 à 4, caractérisé par le fait que lesdites couches supérieure et inférieure présentent chacune une épaisseur de l'ordre de 8 à 10 mm.

6. Revêtement selon l'une des revendications 1 à 5, caractérisé par le fait qu'au moins l'une (1) des couches supérieure et inférieure; est confectionnée en un textile formé de fibres courtes enchevêtrées, l'autre couche (2) étant confectionnée en un textile formé de fibres continues.

7. Revêtement selon l'une des revendications 1 à 5, caractérisé par le fait que les couches supérieure et inférieure (6, 6') sont confectionnées en un textile formé de fibres courtes enchevêtrées.

8. Revêtement selon l'une des revendications 1 à 5, caractérisé par le fait que les couches supérieure et inférieure (7, 7') sont confectionnées en un textile formé de fibres continues.

9. Revêtement selon l'une des revendications 1 à 8, caractérisé par le fait que lesdits textiles sont des textiles synthétiques.

10. Revêtement selon l'une des revendications 1 à 8, caractérisé par le fait que lesdits textiles sont des textiles naturels ayant subi un traitement apte à les rendre imputrescibles.

11. Revêtement selon l'une des revendications 1 à 8, caractérisé par le fait que lesdits textiles sont un mélange de textiles synthétiques et de textiles naturels.

## Claims

1. A floor covering for stables, comprising at least two mutually interlaced textile layers, an upper layer (1, 6, 7) and a lower layer (2, 6', 7'), and possibly intermediate layers, the upper face of said upper layer (1, 6, 7) particularly presenting a high resistance against abrasion and a permeability permitting evaporation, characterized in that said upper layer (1), situated on the side from which the interlacing takes place, is impregnated at least near its upper face with at least one material (4) chosen from the group comprising a reticulated copolymer on the basis of acrylic resin and styrene, and an acrylic resin, the impregnation rate being comprised between 500 and 2 000 g of material per square meter of surface.

2. A covering according to claim 1, characterized in that the copolymer is made of styrene butadiene and acrylic resins.

3. A covering according to claim 2, characterized in that the impregnation material is obtained from the following mixture :

50 parts of an aqueous solution of styrene butadiene resin at 50 % of dry extract

50 parts of an aqueous dispersion of acrylic resin at 50 % of dry extract

10 parts of a solution of melamine formol at 70 % of dry extract

1 part of an acid catalyst.

4. A covering according to one of claims 1 to 3, characterized in that the impregnation depth of said upper layer is of the order of 2 to 3 mm.

5. A covering according to one of claims 1 to 4, characterized in that said upper and lower layers each present a thickness of about 8 to 10 mm.

6. A covering according to one of claims 1 to 5, characterized in that at least one (1) of the upper and lower layers is made of a textile formed by short interlocked fibers, the other layer (2) being made of a textile formed by continuous fibers.

7. A covering according to one of claims 1 to 5, characterized in that the upper and lower layers (6, 6') are made of a textile formed by short interlocked fibers.

8. A covering according to one of claims 1 to 5, characterized in that the upper and lower layers (7, 7') are made of a textile formed by continuous fibers.

9. A covering according to one of claims 1 to 8, characterized in that said textiles are synthetic textiles.

10. A covering according to one of claims 1 to 8, characterized in that said textiles are natural textiles which have been submitted to a treatment making them imputrescible.

11. A covering according to one of claims 1 to 8, characterized in that said textiles are a mixture of synthetic and natural textiles.

## Patentansprüche

1. Bodenbelag für Ställe, mit mindestens zwei miteinander vernadelten Gewebeschichten, einer oberen Schicht (1, 6, 7) und einer unteren Schicht (2, 6', 7') und eventuell mit Zwischenschichten, wobei die Oberseite der oberen Schicht (1, 6, 7) insbesondere einen hohen Abschleifwiderstand und eine Durchlässigkeit aufweist, die die Verdunstung ermöglicht, dadurch gekennzeichnet, daß die obere Schicht (1), die sich auf der Seite befindet, auf der das Durchnadeln stattfindet, mindestens in der Nähe ihrer Oberseite mit mindestens einem Material (4) imprägniert ist, das aus der Gruppe ausgewählt wird, die ein vernetztes Copolymer auf der Basis von Acrylharz und Styrol und ein Acrylharz enthält, wobei der Imprägnier-

satz zwischen 500 und 2 000 g Material pro Quadratmeter Oberfläche beträgt.

2. Belag gemäß Anspruch 1, dadurch gekennzeichnet, daß das Copolymer auf der Basis von Styrol-Butadienharzen und Acrylharzen besteht.

3. Belag nach Anspruch 2, dadurch gekennzeichnet, daß das Imprägniermaterial ausgehend von der folgenden Mischung erhalten wird :

50 Teile einer wässrigen Lösung von Styrol-Butadienharz bei 50 % Trockenauszug

50 Teile einer wässrigen Dispersion von Acrylharz bei 560 % Trockenauszug

10 Teilen einer Lösung aus Formolmelamin bei 70 % Trockenauszug

1 Teil eines sauren Katalysators.

4. Belag nach einem der Ansprüche 1 bis 3, dadurch gekennzeichnet, daß die Imprägniertiefe der oberen Schicht etwa 2 bis 3 mm beträgt.

5. Belag nach einem der Ansprüche 1 bis 4, dadurch gekennzeichnet, daß die oberen und unteren Schichten je eine Dicke von etwa 8 bis 10 mm aufweisen.

6. Belag nach einem der Ansprüche 1 bis 5, dadurch gekennzeichnet, daß mindestens eine (1) der oberen und unteren Schichten aus einem aus kurzen verschachtelten Fasern gebildeten Gewebe besteht, während die andere Schicht (2) aus einem aus durchgehenden Fasern gebildeten Gewebe besteht.

7. Belag nach einem der Ansprüche 1 bis 5, dadurch gekennzeichnet, daß die obere und untere Schicht (6, 6') aus einem Gewebe aus kurzen verschachtelten Fasern bestehen.

8. Belag nach einem der Ansprüche 1 bis 5, dadurch gekennzeichnet, daß die obere und untere Schicht (7, 7') aus einem Gewebe aus durchgehenden Fasern bestehen.

9. Belag nach einem der Ansprüche 1 bis 8, dadurch gekennzeichnet, daß die Gewebe synthetische Gewebe sind.

10. Belag nach einem der Ansprüche 1 bis 8, dadurch gekennzeichnet, daß die Gewebe natürliche Gewebe sind, die eine Behandlung unterzogen wurden, die sie nicht-faulend macht.

11. Belag nach einem der Ansprüche 1 bis 8, dadurch gekennzeichnet, daß die Gewebe eine Mischung aus synthetischen und natürlichen Geweben sind.

# FIG.1

# FIG.2

# FIG.3